# EUROPÄISCHE PATENTSCHRIFT

(11) **EP 2 937 380 B1**
(45) Veröffentlichungstag und Bekanntmachung des Hinweises auf die Patenterteilung: **10.07.2019**
(21) Anmeldenummer: 14165942.5
(22) Anmeldetag: 25.04.2014
(51) Int. Cl.: C08K 3/36, C08K 5/3445, C08K 9/12, C08L 23/16

(54) **Polymermischung**
Polymer mixture
Mélange de polymères

(43) Veröffentlichungstag der Anmeldung: 28.10.2015
(73) Patentinhaber: ContiTech AG, 30165 Hannover (DE)
(72) Erfinder: Sostmann, Stefan, 30855 Langenhagen (DE); Herrmann, Wolfram, 31515 Wunstorf (DE); Lorenz, Corinna, 38106 Braunschweig (DE); Paulsen, Hans-Peter, 37079 Göttingen (DE); Teves, Reinhard, 30926 Seelze (DE); Freudenmann, Roland, 30900 Wedemark (DE)
(74) Vertreter: Preusser, Andrea

(56) Entgegenhaltungen:
- EP-A2- 2 258 731
- US-A1- 2006 173 115
- US-A1- 2007 293 610
- VALKENBERG M H ET AL: "Immobilisation of ionic liquids on solid supports", GREEN CHEMISTRY, ROYAL SOCIETY OF CHEMISTRY, CAMBRIDGE, GB, Bd. 4, 1. Januar 2002 (2002-01-01), Seiten 88-93, XP009158382, ISSN: 1463-9262, DOI: 10.1039/B107946H [gefunden am 2001-12-17]

## Beschreibung

Die Erfindung betrifft eine Polymermischung, welche wenigstens eine Ionische Flüssigkeit enthält, insbesondere für Reifen, Gurte, Riemen und Schläuche.

Die Verwendung von Ionischen Flüssigkeiten in Kautschukmischungen ist bereits aus verschiedenen Schriften bekannt. Insbesondere zur Beeinflussung der Leitfähigkeit wird in WO 2009/003853 ganz allgemein der Einsatz von ionischen Flüssigkeiten in Kautschukmischungen erwähnt.
Des Weiteren finden Ionische Flüssigkeiten bspw. Anwendung als Lösungsmittel und oder als Katalysatoren on organischen Synthesen, siehe K. R. Seddon in J. Chem. Technol. Biotechnol. 68 (1997), 351-356, T. Welton, in Chem. Rev. 99 (1999), 2071-2083, J. D. Holbrey, K. R. Seddon in Clean Products and Processes 1 (1999) 223-236, P. Wasserscheid, W. Keim in Angew. Chem. 112 (2000), 3926-3945 oder R. Sheldon in Chem. Comm. (2001), 2399-2407.
Ionische Flüssigkeiten werden häufig auch als Zusätze zur Verbesserung der elektrischen Leitfähigkeit in Thermoplasten eingesetzt, siehe bspw. DE000010243181A1, DE000010100455A1 oder EP2468812A1. Dies ist allerdings immer verbunden mit einer Weichmacher- und Lösemitteleigenschaft der Ionischen Flüssigkeiten, wodurch sie nur in geringen Mengen eingesetzt werden können. Um einen tatsächlich signifikanten Effekt bezüglich der Leitfähigkeit zu erreichen, werden allerdings relativ große Mengen an Ionischen Flüssigkeiten benötigt. Die obige Weichmachereigenschaft der Ionischen Flüssigkeiten führt dazu, dass eine Anwendung in Kautschukmischungen deutlich erschwert wird. Es sei denn, es wird genau diese Weichmachereigenschaft, zum Beispiel zur Dämpfung wie aus DE102008043693A1 bekannt, benötigt.

Die Ionischen Flüssigkeiten werden hierbei meist in situ der Rezeptur hinzugefügt, allerdings immer verbunden mit dem Nachteil der Weichmachereigenschaft, siehe zum Beispiel DE102009044345A1, US2005143499A1, JP2005048139A oder EP2500376A1. Ebenso ist u.a. aus A. Das et al.: Carbon 47 (2009) 3313, T. Sekitani et al.: Science 321 (2008) 1468-1472, Composites Science and Technology 71:1441-1449, 2011 oder aus DE102005003298A1 bekannt, dass Ionische Flüssigkeiten als Dispergierungshilfsmittel für Füllstoffe wie Ruß oder Kohlenstoffnanoröhren in Kautschukmischungen eingesetzt werden können. So haben beispielsweise bereits sehr geringe Konzentrationen eines mit einer Ionischen Flüssigkeit modifizierten Rußes in DE102011001658A1 deutlich verbesserte Reißeigenschaften gezeigt.
Die Anwendung von Ionischen Flüssigkeiten in Kautschukmischungen für Reifen zur Verbesserung der Leitfähigkeit ist u.a. aus EP2489679A1 oder US 7,528,186B2 bekannt. Auch hier werden die Ionischen Flüssigkeiten in geringen Mengen in situ hinzugefügt, immer verbunden mit der Weichmachereigenschaft.

Die vorliegende Erfindung hat daher die Aufgabe, eine Polymermischung bereitzustellen, die sich durch optimierte Leitfähigkeiten und Reißeigenschaften (Reißfestigkeit und Reißdehnung) auszeichnet, wobei sich keine negativen Weichmacherwirkungen der Ionischen Flüssigkeiten in der Polymermatrix zeigen und wobei die Ionischen Flüssigkeiten in vergleichsweise großen Mengen hinzugefügt werden können.

Gelöst wird diese Aufgabe durch eine Polymermischung enthaltend wenigstens ein Polymer und 10 bis 50 phr wenigstens einer auf wenigstens einem hellen Füllstoff aufgebrachten Ionischen Flüssigkeit wobei der helle Füllstoff Kieselsäure und / oder Aluminiumhydroxid und / oder Kalk und / oder Stärke und / oder Magnesiumoxid und / oder Titandioxid ist und wobei das Polymer ein polarer oder unpolarer Kautschuk ist, wobei der polare oder unpolare Kautschuk ausgewählt ist aus der Gruppe, bestehend aus natürlichem Polyisopren und / oder synthetischem Polyisopren und / oder Butadien-Kautschuk und / oder Styrolbutadienkautschuk und / oder Flüssigkautschuken und / oder Halobutylkautschuk und / oder Polynorbornen und / oder Isopren-Isobutylen-Copolymer und / oder Ethylen-Propylen-Dien-Kautschuk und / oder Nitrilkautschuk und / oder Chloroprenkautschuk und / oder Acrylat-Kautschuk und / oder Fluorkautschuk und / oder Silikon-Kautschuk und / oder Epichlorhydrinkautschuk und / oder Styrol-Isopren-Butadien-Terpolymer und / oder hydrierter Acrylnitrilbutadienkautschuk und / oder Isopren-Butadien-Copolymer und / oder Ethylen-Propylen-Mischpolymerisat und / oder Ethylen-Propylen-Dien-Mischpolymerisat (EPDM) und / oder (teil)hydrierter Nitrilkautschuk und / oder Butylkautschuk und / oder Brombutylkautschuk und / oder Chlorbutylkautschuk und / oder Chloriertes Polyethylen und / oder Chlorsulfoniertes Polyethylen und / oder Polyepichlorhydrin und / oder Ethylen-Vinylacetat-Kautschuk und / oder Acrylat-Kautschuk und / oder Fluorierter Methylsiliconkautschuk und / oder Perfluorenierter Propylen-Kautschuk und / oder Perflurocarbon-Kautschuk und / oder Polyurethan.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke, nicht auf Duroplasten, Thermoplasten oder thermoplastische Elastomere, bezogen.

Es wurde überraschenderweise gefunden, dass sich die Ionischen Flüssigkeiten auch in relativ großen Mengen in Polymermischung einbringen lassen, wenn sie sich bereits vor dem Einmischen auf der Oberfläche wenigstens eines hellen Füllstoffs befinden. Hierzu muss die Ionische Flüssigkeit vor dem Einmischen auf die Oberfläche des hellen Füllstoffs aufgebracht werden. Der helle Füllstoff wirkt sozusagen als Trägermaterial zum Einbringen der Ionischen Flüssigkeiten in großen Mengen in die Polymermischung. Die Ionischen Flüssigkeiten lassen sich vorab gut auf die Oberflächen der hellen Füllstoffe aufbringen und in dieser Form im herkömmlichen Mischprozess in die Rezeptur einmischen. Hierdurch können größere Mengen Ionische Flüssigkeiten eingemischt werden, ohne das negative Eigenschaften, insbesondere hinsichtlich der Weichmacherwirkung, in der Polymermischung und den daraus hergestellten Vulkanisaten zu beobachten sind. Dies führt zu einer weiteren Optimierung der Leitfähigkeiten.
Ein Grund für die ausbleibende negative Beeinflussung der physikalischen Eigenschaften liegt möglicherweise darin, dass die Ionischen Flüssigkeiten auch nach dem Einmischen in der Nähe der Oberfläche des hellen Füllstoffs verbleiben und die Polymermatrix dadurch nicht beeinträchtigen.
Als helle Füllstoffe werden neben Kieselsäure auch Aluminiumhydroxid, Kalk, Stärke, Magnesiumoxid oderTitandioxid erfindungsgemäß verwendet. Diese hellen Füllstoffe können alleine oder in Kombination verwendet werden. So ist es bspw. auch möglich, dass wenigstens zwei verschiedene Typen Kieselsäure, etc. verwendet werden.
Insbesondere helle Füllstoffe, die eine vergleichsweise hohe polare Oberfläche besitzen, bilden eine gute Wechselwirkung mit der Ionischen Flüssigkeit aus und sind daher besonders gut geeignet.
Erfindungsgemäß kann ein heller Füllstoff Kieselsäure sein. Die Verwendung von Kieselsäure ist für den zu erzielenden Leitfähigkeitseffekt von besonderem Vorteil, da die leitfähigkeitsaktive Ionische Flüssigkeit mit Hilfe der Kieselsäure zu einem besonders guten leitfähigen Gerüst in der Kautschukrezeptur verteilt wird. Auf diesem Gerüst liegt die Ionische Flüssigkeit in relativ hoher Konzentration vor, wobei die Kieselsäure durch seine Neigung zum Ausbilden fraktaler Füllstoffstrukturen für durchgehende Leitpfade in der Polymermischung sorgt.
Die in der Polymerindustrie eingesetzten Kieselsäuren sind in der Regel gefällte Kieselsäuren, die insbesondere nach ihrer Oberfläche charakterisiert werden. Zur Charakterisierung werden dabei die Stickstoff-Oberfläche (BET) gemäß DIN 66131 und DIN 66132 als Maß für die innere und äußere Füllstoffoberfläche in m²/g und die CTAB-Oberfläche gemäß ASTM D 3765 als Maß für die äußere Oberfläche, die oftmals als die kautschukwirksame Oberfläche angesehen wird, in m²/g angegeben.
Erfindungsgemäß werden Kieselsäuren mit einer Stickstoff-Oberfläche größer oder gleich 50 m²/g, bevorzugt zwischen 50 und 320 m²/g, besonders bevorzugt zwischen 100 und 250 m²/g, und einer CTAB-Oberfläche zwischen 50 und 300 m²/g , bevorzugt zwischen 50 und 250 m²/g und besonders bevorzugt zwischen 80 und 250 m²/g, eingesetzt.
Bevorzugt ist es, wenn die Polymermischung 1 bis 150 phr, besonders bevorzugt 10 bis 100 phr, wenigstens einer Kieselsäure enthält. Diese Mengenangaben beziehen sich auf die reine Menge Kieselsäure, nicht auf die Menge an Kieselsäure plus bzw. incl. der Ionischen Flüssigkeiten.

Der Füllstoff Ruß eignet sich zum Einbringen größerer Mengen von Ionischen Flüssigkeiten in die Polymermischung aufgrund seiner geringen Polarität nicht. Werden die Ionischen Flüssigkeiten auf Ruß aufgebracht, so werden sie beim Einmischen fast vollständig wieder abgelöst und es kommt in hohen Mengen zu der bereits erwähnten Weichmacherwirkung.

Durch die vorliegende Erfindung ist es nun auch möglich, dass Ionische Flüssigkeiten auch in großen Mengen für nicht-schwarze Polymermischungen verwendet werden können, d.h. Polymermischungen in denen die klassischen kohlenstoffbasierten Füllstoffe, wie z.B. Ruß, nicht eingesetzt werden können oder sollen.

Die Einteilung der Polymere erfolgt gemäß DIN 7724 durch den Temperaturverlauf des Schubmoduls und den Zugverformungsrest bei Raumtemperatur. Sie beruht auf dem mechanischen Verhalten im Gebrauchstemperaturbereich und der Existenz eines Schmelzbereiches (Fließbereiches). Somit werden die Polymere in Duroplaste, Elastomere, auch als Kautschuke bezeichnet, Thermoplasten und Thermoplastische Elastomere, auch als Thermoplastische Kautschuke bezeichnet, eingeteilt.

Erfindungsgemäß wird als Polymer wenigstens ein polarer oder unpolarer Kautschuk verwendet.
Der polare oder unpolare Kautschuk ist dabei ausgewählt aus der Gruppe, bestehend aus natürlichem Polyisopren und / oder synthetischem Polyisopren und / oder Butadien-Kautschuk und / oder Styrolbutadienkautschuk und / oder Flüssigkautschuken und / oder Halobutylkautschuk und / oder Polynorbornen und / oder Isopren-Isobutylen-Copolymer und / oder Ethylen-Propylen-Dien-Kautschuk und / oder Nitrilkautschuk und / oder Chloroprenkautschuk und / oder Acrylat-Kautschuk und / oder Fluorkautschuk und / oder Silikon-Kautschuk und / oder Epichlorhydrinkautschuk und / oder Styrol-Isopren-Butadien-Terpolymer und / oder hydrierter Acrylnitrilbutadienkautschuk und / oder Isopren-Butadien-Copolymer und / oder Ethylen-Propylen-Mischpolymerisat und / oder Ethylen-Propylen-Dien-Mischpolymerisat (EPDM) und / oder (teil)hydrierter Nitrilkautschuk und / oder Butylkautschuk und / oder Brombutylkautschuk und / oder Chlorbutylkautschuk und / oder Chloriertes Polyethylen und / oder Chlorsulfoniertes Polyethylen und / oder Polyepichlorhydrin und / oder Ethylen-Vinylacetat-Kautschuk und / oder Acrylat-Kautschuk und / oder Fluorierter Methylsiliconkautschuk und / oder Perfluorenierter Propylen-Kautschuk und / oder Perflurocarbon-Kautschuk und / oder Polyurethan.

Insbesondere die genannten Kautschuke, die Dienkautschuke sind, können mit Hydroxylgruppen und / oder Epoxygruppen und / oder Siloxangruppen und / oder Aminogruppen und / oder Aminosiloxan und / oder Carboxylgruppen und / oder Phtalocyaningruppen modifiziert sein. Es kommen aber auch weitere, der fachkundigen Person bekannte, Modifizierungen, auch als Funktionalisierungen bezeichnet, in Frage. Ebenfalls kann Kautschuk teilweise oder vollständig hydriert sein.
Insbesondere Nitrilkautschuk, hydrierter Acrylnitrilbutadienkautschuk, Chloroprenkautschuk, Butylkautschuk, Halobutylkautschuk oder Ethylen-Propylen-Dien-Kautschuk kommen bei der Herstellung von technischen Gummiartikeln, wie Gurte, Riemen und Schläuche, zum Einsatz.
Als Thermoplasten können u.a. Acrylnitril-Butadien-Styrol (ABS), Polyamid (PA), Polylactat (PLA), Polymethylmethacrylat (PMMA), Polycarbonat (PC), Polyethylenterephthalat (PET), Polyethylen (PE), Polypropylen (PP), Polystyrol (PS), Polyetheretherketon (PEEK) und / oder Polyvinylchlorid (PVC) alleine oder in Kombination verwendet werden.
Als thermoplastische Elastomere können u.a. TPE-O (TPO, thermoplastische Elastomere auf Olefinbasis, vorwiegend PP/EPDM), TPE-V (TPV, vernetzte thermoplastische Elastomere auf Olefinbasis, vorwiegend PP/EPDM), TPE-U (TPU, thermoplastische Elastomere auf Urethanbasis), TPE-E (TPC, thermoplastische Polyesterelastomere / Thermoplastische Copolyester), TPE-S (TPS, Styrol-Blockcopolymere (SBS, SEBS, SEPS, SEEPS und MBS) und / oder TPE-A (TPA, thermoplastische Copolyamide) alleine oder in Kombination verwendet werden. Insbesondere TPE-O und TPE-S haben sich als besonders vorteilhaft erwiesen.

Eine Kombination verschiedener Polymertypen, zum Beispiel die Kombination von Kautschuk und thermoplastischem Elastomer, ist möglich.

Erfindungsgemäß enthält die Polymermischung 10 bis 50 phr, bevorzugt 20 bis 40 phr, besonders bevorzugt 20 bis 30 phr, wenigstens einer auf wenigstens einer Kieselsäure aufgebrachten Ionischen Flüssigkeit.
Die Mengenangabe bezieht sich hierbei auf die reine Menge an Ionischen Flüssigkeiten, nicht auf die eingefügte Menge an Kieselsäure.
Als Ionische Flüssigkeit werden Flüssigkeiten bezeichnet, die aus Kationen und Anionen bestehen.
Als Anionen können beispielweise die folgenden verwendet werden:
Halogenide, Tetrafluorborate, Trifluoracetate, Triflate, Hexafluorphosphate, Phosphinate, Tosylate, Antimonate, Aluminate, Sulfonate, Ferrate, organische Ionen, wie bspw. Imide und Amide.

Als Kationen, die in einer bevorzugten Ausführungsform alkyliert sind, können beispielweise die folgenden verwendet werden:
Imidazolium, Pyridinium, Pyrrolidinium, Guanidinium, Uronium, Thiouronium, Piperidinium, Morpholinium, Ammonium und Phosphonium.

Mögliche Ionische Flüssigkeiten können daher sein:
1-Allyl-3-Methylimidazoliumchlorid (AMIC)
1 -Ethyl-3 -Methylimidazoliumthiocyanat (EMIT)
1-Ethyl-3-methylimidazoliumchlorid (EMIM Cl)
1-Ethyl-3-methylimidazoliumethylsulfat (EMIM EtOSC₃)
1-Ethyl-3-methylimidazoliummethansulfonat (EMIM MeSO₃)
1-Methyl-3-Octylimidazoliumchlorid (MOIC)
3-(Triphenylphosphonium)-1-Sulfonsäuretosylat (TPST)
Trihexyltetradecylphosphoniumdecanoat (TTDPD)
1-Butyl-3-Methyl-Imidazolium-Bis(Trifluoromethylsulphonyl)Imid (BMI)

Insbesondere EMIM EtOSO₃, EMIM Cl und AMIC sind besonders gut geeignet. Sie erzeugen eine besonders gute Leitfähigkeit aufgrund ihrer besonders guten Anbindung an den hellen Füllstoff, insbesondere an Kieselsäure. Gleichzeitig werden sie bei höheren Temperaturen durch das auf dem hellen Füllstoff, insbesondere durch das auf der Kieselsäure, befindliche oberflächengebundene Wasser nicht so leicht hydrolysiert.

Erfindungswesentlich ist es, dass die Ionische Flüssigkeit auf wenigstens einem hellen Füllstoff aufgebracht vorliegt. Das Einbringen der Ionischen Flüssigkeit in die Polymermischung erfolgt somit nicht in situ, wie es bisher bekannt war. Nur dadurch lassen sich die Ionischen Flüssigkeiten, wie oben bereits erwähnt, sinnvoll in größeren Mengen in die Polymermatrix einbringen.

Die erfindungsgemäße Polymermischung kann des Weiteren zumindest noch einen dunklen Füllstoff, bevorzugt Ruß, enthalten. Die Menge an Ruß beträgt 0 bis 100 phr. Der Ruß wird in einer bevorzugten Ausführungsform in Mengen von 0,1 bis 100 phr, besonders bevorzugt in Mengen von 1 bis 80 phr, ganz besonders bevorzugt in Mengen von 5 bis 60 phr, eingesetzt. In einer besonders bevorzugten Ausführungsform hat der Ruß eine Iodzahl, gemäß ASTM D 1510, die auch als Iodabsorptionszahl bezeichnet wird, größer oder gleich 20 g/kg, bevorzugt größer oder gleich 35 g/kg, besonders bevorzugt größer oder gleich 50 g/kg, ganz besonders bevorzugt größer oder gleich 75 g/kg und eine DBP-Zahl größer oder gleich 60 cm³/100g, bevorzugt größer oder gleich 80 cm³ /100g. Die DBP-Zahl gemäß ASTM D 2414 bestimmt das spezifische Absorptionsvolumen eines Rußes oder eines hellen Füllstoffes mittels Dibutylphthalat.

Es können in der Polymermischung auch noch Kautschukgele, Kurzfasern usw. in beliebigen Kombinationen enthalten sein.

Wie bereits oben erwähnt, ist die Erfindung insbesondere für nicht-schwarze Polymermischungen mit guter Leitfähigkeit geeignet. Insofern beträgt die Menge an dunklen Füllstoffen bevorzugt 0 phr, d.h. die erfindungsgemäße Polymermischung ist bevorzugt frei von dunklen Füllstoffen.

Falls ein Kupplungsagens, in Form von Silan oder einer siliziumorganischen Verbindung, benötigt wird, so beträgt die Menge des Kupplungsagens 0 bis 20 phr, bevorzugt 0,1 bis 15 phr, besonders bevorzugt 0,5 bis 10 phr. Als Kupplungsagenzien können dabei alle der fachkundigen Person für die Verwendung in Polymermischungen bekannten verwendet werden.

Es können in der Polymermischung 0,1 bis 150 phr, bevorzugt 1 bis 80 phr zumindest eines Weichmachers vorhanden sein. Dieser Weichmacher ist bevorzugt ausgewählt aus der Gruppe, bestehend aus Mineralölen und / oder synthetischen Weichmachern und / oder Fettsäuren und / oder Fettsäurederivaten und / oder Harzen und / oder Faktisse und / oder Glyceriden und / oder flüssigen Polymeren und / oder Terpenen und / oder Saatenölen und / oder Biomass-To-Liquid-Ölen und / oder Rubber-To-Liquid-Ölen.

Weiterhin kann die Polymermischung in Abhängigkeit von den eingesetzten Polymeren noch weitere Zusatzstoffe enthalten.
Weitere Zusatzstoffe beinhaltet im Wesentlichen ggf. das Vernetzungssystem (Vernetzer, Schwefelspender und / oder elementarer Schwefel, Peroxide, Beschleuniger und Verzögerer), Ozonschutzmittel, Alterungsschutzmittel, Mastikationshilfsmittel, Verarbeitungshilfsmittel und weitere Aktivatoren.
Der Mengenanteil der Gesamtmenge an weiteren Zusatzstoffen beträgt 2 bis 150 phr, bevorzugt 3 bis 100 phr und besonders bevorzugt 5 bis 80 phr.

Die Polymermischung kann durch alle der fachkundigen Person bekannten Vulkanisationsverfahren vulkanisiert werden.

Die Erfindung soll nun anhand von Vergleichs- und Ausführungsbeispielen, die in Tabelle 1 zusammengefasst sind, näher erläutert werden. "Ref" Stellt hierbei eine Referenz ohne Ionische Flüssigkeiten dar. Die mit "E" gekennzeichneten Mischungen sind hierbei erfindungsgemäße Mischungen, während es sich bei den mit "V" gekennzeichneten Mischungen um Vergleichsmischungen handelt. Bei den Vergleichsmischungen wurde die Ionische Flüssigkeit während des Mischverfahrens in situ hinzugefügt. Bei den erfindungsgemäßen Beispielen wurde in einem ersten Verfahrensschritt die Ionische Flüssigkeit auf die Kieselsäure aufgebracht und die mit der Ionischen Flüssigkeit versehene Kieselsäure wurde anschließend im weiteren Mischverfahren hinzugefügt.
Im oberen Teil der Tabelle finden sich jeweils die Mischungszusammensetzungen, während im unteren Teil der Tabelle die dazugehörigen entsprechenden physikalischen Eigenschaften illustriert sind.
Bei sämtlichen in der Tabelle enthaltenen Mischungsbeispielen sind die angegebenen Mengenangaben Gewichtsteile, die auf 100 Gewichtsteile Gesamtpolymer bezogen sind (phr).

Die Mischungsherstellung erfolgte erfindungsgemäß in mehreren Stufen in einem Labortangentialmischer. Aus sämtlichen Mischungen wurden Prüfkörper durch Vulkanisation hergestellt und mit diesen Prüfkörpern für die Polymerindustrie typische Materialeigenschaften bestimmt. Für die obig beschriebenen Tests an Prüfkörpern wurden folgende Testverfahren angewandt:
- Rückprallelastizität bei Raumtemperatur und 70°C gemäß DIN 53 512
- Konditionierte Shore-A-Härte bei Raumtemperatur gemäß DIN 53 505
- Spannungswert bei 100% Dehnung bei Raumtemperatur gemäß DIN 53 504
- Bruchdehnung bei Raumtemperatur gemäß DIN 53 504
- Zugfestigkeit bei Raumtemperatur gemäß DIN 53 504
- Durchgangswiderstand gemäß DIN IEC 93 / VDE0303 an 2mm dicken Proben

**Tabelle 1**

| **Bestandteile** | **Einheit** | **Ref** | **V1** | **V2** | **E1** | **E2** |
|---|---|---|---|---|---|---|
| EPDM | phr | 100 | 100 | 100 | 100 | 100 |
| Kieselsäure^{a} | phr | 30 | 30 | 30 | 30 | 30 |
| Ionische Flüssigkeit^{b} | phr | -- | 20 | 30 | 20 | 30 |
| Weichmacher^{c} | phr | 5 | 5 | 5 | 5 | 5 |
| Zinkoxid | phr | 10 | 10 | 10 | 10 | 10 |
| Alterungsschutzmittel^{d} | phr | 2 | 2 | 2 | 2 | 2 |
| Peroxid^{c} | phr | 10 | 10 | 10 | 10 | 10 |
| Durchgangswiderstand | Ohm | 2,50 E+11 | 1,30 E+06 | 1,10 E+06 | 1,60 E+05 | 1,30 E+05 |
| Shore-Härte | ShA | 76 | 68 | 66 | 71 | 70 |
| Rückprallelastizität | % | 63 | 60 | 58 | 63 | 63 |
| Bruchdehnung | % | 253 | 298 | 303 | 285 | 286 |
| Zugfestigkeit | MPa | 9,1 | 5,6 | 5 | 6 | 5,9 |
| Spannungswert | MPa | 3,1 | 1,8 | 1,6 | 2,3 | 2,3 |

| | | | | | | |
|---|---|---|---|---|---|---|
| ^{a}VN3, Fa. Evonik, CTAB 160m²/g, BET 175 m²/g ^{b}EMIM EtOSO₃, Basionics LQ01, Fa. BASF ^{c}Paraffinöl ^{d}6PPD ^{e}Di(tert- butylperoxyisopropyl)benzol, Perkadox 1440, Fa. Akzo Nobel | | | | | | |

Aus Tabelle 1 ist insbesondere anhand der Rückprallelastizität ersichtlich, dass die erfindungsgemäßen Polymermischungen auch bei relativ großen Mengen keine Weichmacherwirkung der Ionischen Flüssigkeit zeigen.

## Patentansprüche

1. Polymermischung, **dadurch gekennzeichnet, dass** sie wenigstens ein Polymer und 10 bis 50 phr wenigstens einer auf wenigstens einem hellen Füllstoff aufgebrachten Ionischen Flüssigkeit enthält, wobei der helle Füllstoff Kieselsäure und / oder Aluminiumhydroxid und / oder Kalk und / oder Stärke und / oder Magnesiumoxid und / oder Titandioxid ist und wobei das Polymer ein polarer oder unpolarer Kautschuk ist, wobei der polare oder unpolare Kautschuk ausgewählt ist aus der Gruppe, bestehend aus natürlichem Polyisopren und / oder synthetischem Polyisopren und / oder Butadien-Kautschuk und / oder Styrolbutadienkautschuk und / oder Flüssigkautschuken und / oder Halobutylkautschuk und / oder Polynorbornen und / oder Isopren-Isobutylen-Copolymer und / oder Ethylen-Propylen-Dien-Kautschuk und / oder Nitrilkautschuk und / oder Chloroprenkautschuk und / oder Acrylat-Kautschuk und / oder Fluorkautschuk und / oder Silikon-Kautschuk und / oder Epichlorhydrinkautschuk und / oder Styrol-Isopren-Butadien-Terpolymer und / oder hydrierter Acrylnitrilbutadienkautschuk und / oder Isopren-Butadien-Copolymer und / oder Ethylen-Propylen-Mischpolymerisat und / oder Ethylen-Propylen-Dien-Mischpolymerisat (EPDM) und / oder (teil)hydrierter Nitril-kautschuk und / oder Butylkautschuk und / oder Brombutylkautschuk und / oder Chlorbutylkautschuk und / oder Chloriertes Polyethylen und / oder Chlorsulfoniertes Polyethylen und / oder Polyepichlorhydrin und / oder Ethylen-Vinylacetat-Kautschuk und / oder Acrylat-Kautschuk und / oder Fluorierter Methylsiliconkautschuk und / oder Perfluorenierter Propylen-Kautschuk und / oder Perflurocarbon-Kautschuk und / oder Polyurethan.

2. Polymermischung nach Anspruch 1, **dadurch gekennzeichnet, dass** die Ionische Flüssigkeit ausgewählt ist aus der Gruppe bestehend aus l-Allyl-3-Methylimidazoliumchlorid, 1-Ethyl-3-Methylimidazoliumthiocyanat, 1-Ethyl-3-methylimidazoliumchlorid, 1-Ethyl-3-methylimidazoliumethylsulfat, 1-Ethyl-3-methylimidazoliummethansulfonat, 1-Methyl-3-Octylimidazoliumchlorid, 3-(Triphenylphosphonium)-1-Sulfonsäuretosylat, Trihexyltetradecylphosphoniumdecanoat und 1-Butyl-3-Methyl-Imidazolium-Bis(Trifluoromethylsulphonyl)Imid.

3. Verwendung einer Polymermischung nach Anspruch 1 zur Herstellung eines technischen Kautschukartikels.

4. Verwendung gemäß Anspruch 3 zur Herstellung eines Reifens, Gurtes, Riemens oder Schlauches.

## Claims

1. Polymer mixture, **characterized in that** it contains at least one polymer and 10 to 50 phr of at least one ionic liquid applied to at least one light-colored filler, wherein the light-colored filler is silica and/or aluminium hydroxide and/or lime and/or starch and/or magnesium oxide and/or titanium dioxide and wherein the polymer is a polar or nonpolar rubber, wherein the polar or nonpolar rubber is selected from the group consisting of natural polyisoprene and/or synthetic polyisoprene and/or butadiene rubber and/or styrene butadiene rubber and/or liquid rubbers and/or halobutyl rubber and/or polynorbornenes and/or isoprene-isobutylene copolymer and/or ethylene-propylene-diene rubber and/or nitrile rubber and/or chloroprene rubber and/or acrylate rubber and/or fluororubber and/or silicone rubber and/or epichlorohydrin rubber and/or styrene-isoprene-butadiene terpolymer and/or hydrogenated acrylonitrile butadiene rubber and/or isoprene-butadiene copolymer and/or ethylene-propylene copolymer, and/or ethylene-propylene-diene copolymer (EPDM) and/or (partially) hydrogenated nitrile rubber and/or butyl rubber and/or bromobutyl rubber and/or chlorobutyl rubber and/or chlorinated polyethylene and/or chlorosulfonated polyethylene and/or polyepichlorohydrin and/or ethylene-vinyl acetate rubber and/or acrylate rubber and/or fluorinated methylsilicone rubber and/or perfluorinated propylene rubber and/or perfluorocarbon rubber and/or polyurethane.

2. Polymer mixture according to Claim 1, **characterized in that** the ionic liquid is selected from the group consisting of 1-allyl-3-methylimidazolium chloride, 1-ethyl-3-methylimidazolium thiocyanate, 1-ethyl-3-methylimidazolium chloride, 1-ethyl-3-methylimidazolium ethylsulfate, 1-ethyl-3-methylimidazolium methanesulfonate, 1-methyl-3-octylimidazolium chloride, 3-(triphenylphosphonium)-1-sulfonyl tosylate, trihexyltetradecylphosphonium decanoate and 1-butyl-3-methylimidazolium bis(trifluoromethylsulphonyl)imide.

3. Use of a polymer mixture according to Claim 1 for producing a technical rubber article.

4. Use according to Claim 3 for producing a tyre, belt, drivebelt or hose.

## Revendications

1. Mélange de polymères, **caractérisé en ce qu'**il contient au moins un polymère et 10 à 50 pce d'au moins un liquide ionique appliqué sur au moins une charge claire, la charge claire étant de la silice et/ou de l'hydroxyde d'aluminium et/ou de la chaux et/ou de l'amidon et/ou de l'oxyde de magnésium et/ou du dioxyde de titane, et le polymère étant un caoutchouc polaire ou apolaire, le caoutchouc polaire ou apolaire étant choisi dans le groupe constitué par le polyisoprène naturel et/ou le polyisoprène synthétique et/ou le caoutchouc de butadiène et/ou le caoutchouc de styrène-butadiène et/ou les caoutchoucs liquides et/ou le caoutchouc d'halobutyle et/ou le polynorbornène et/ou le copolymère d'isoprène-isobutylène et/ou le caoutchouc d'éthylène-propylène-diène et/ou le caoutchouc de nitrile et/ou le caoutchouc de chloroprène et/ou le caoutchouc d'acrylate et/ou le caoutchouc fluoré et/ou le caoutchouc de silicone et/ou le caoutchouc d'épichlorhydrine et/ou le terpolymère de styrène-isoprène-butadiène et/ou le caoutchouc d'acrylonitrile-butadiène hydrogéné et/ou le copolymère d'isoprène-butadiène et/ou le copolymère d'éthylène-propylène et/ou le copolymère d'éthylène-propylène-diène (EPDM) et/ou le caoutchouc de nitrile (partiellement) hydrogéné et/ou le caoutchouc de butyle et/ou le caoutchouc de bromobutyle et/ou le caoutchouc de chlorobutyle et/ou le polyéthylène chloré et/ou le polyéthylène chlorosulfoné et/ou la polyépichlorhydrine et/ou le caoutchouc d'éthylène-acétate de vinyle et/ou le caoutchouc d'acrylate et/ou le caoutchouc de méthylsilicone fluoré et/ou le caoutchouc de propylène perfluoré et/ou le caoutchouc de perfluorocarbone et/ou le polyuréthane.

2. Mélange de polymères selon la revendication 1, **caractérisé en ce que** le liquide ionique est choisi dans le groupe constitué par le chlorure de 1-allyl-3-méthylimidazolium, le thiocyanate de 1-éthyl-3-méthylimidazolium, le chlorure de 1-éthyl-3-méthylimidazolium, l'éthylsulfate de 1-éthyl-3-méthylimidazolium, le méthane-sulfonate de 1-éthyl-3-méthylimidazolium, le chlorure de 1-méthyl-3-octylimidazolium, le tosylate de l'acide 3-(triphénylphosphonium)-1-sulfonique, le décanoate de trihexyltétradécylphosphonium et le bis(trifluorométhylsulfonyl)imide de 1-butyl-3-méthyl-imidazolium.

3. Utilisation d'un mélange de polymères selon la revendication 1 pour la fabrication d'un article technique en caoutchouc.

4. Utilisation selon la revendication 3 pour la fabrication d'un pneu, d'une sangle, d'une courroie ou d'un tuyau.
